# FASCICULE DE BREVET EUROPEEN

(11) **EP 2 755 835 B1**
(45) Date de publication et mention de la délivrance du brevet: **14.02.2018**
(21) Numéro de dépôt: 12756786.5
(22) Date de dépôt: 23.08.2012
(51) Int. Cl.: B60J 1/17

(54) **STRUCTURE D'UN OUVRANT DE VEHICULE AUTOMOBILE, ELEMENT DE FIXATION INTEGRE DANS UNE TELLE STRUCTURE ET OUVRANT COMPORTANT UNE TELLE STRUCTURE**
STRUKTUR FÜR EINE KRAFTFAHRZEUGTÜR, IN EINE SOLCHE STRUKTUR INTEGRIERTES BEFESTIGUNGSELEMENT UND TÜR MIT EINER SOLCHEN STRUKTUR
STRUCTURE OF AN AUTOMOBILE DOOR, AN ATTACHMENT ELEMENT INTEGRATED IN SUCH STRUCTURE AND A DOOR COMPRISING SUCH STRUCTURE

(30) Priorité: 12.09.2011 FR 1158079
(43) Date de publication de la demande: 23.07.2014
(73) Titulaire: Renault s.a.s., 92100 Boulogne-Billancourt (FR)
(72) Inventeur: LACOURT, Philippe, 91390 Morsang sur Orge (FR); DUEZ, Mickael, 78370 Plaisir (FR)
(86) Numéro de dépôt international: PCT/FR2012/051926
(87) Numéro de publication internationale: WO 2013/038086

(56) Documents cités:
- WO-A1-2011/014684
- DE-A1- 4 427 989
- FR-A1- 2 877 031

## Description

### Domaine technique de l'invention

L'invention concerne le domaine des ouvrants de véhicules automobile, et notamment les contraintes qui déterminent leur structure interne.

L'invention concerne plus particulièrement une structure d'un ouvrant de véhicule automobile, comportant au moins :
- un caisson inférieur creux sur un bord supérieur duquel est fixé un cadre destiné à recevoir une vitre du véhicule,
- ledit cadre étant muni d'au moins un montant de guidage supérieur et le caisson étant muni d'au moins un montant de guidage inférieur, fixé audit caisson par l'intermédiaire d'un premier élément de fixation,
- lesdits montants de guidage supérieur et inférieur étant destinés au coulissement de la vitre entre une position haute, dans laquelle la vitre est reçue par ledit montant de guidage supérieur, et une position basse, dans laquelle la vitre est reçue à l'intérieur du caisson par ledit montant de guidage inférieur, et
- des moyens de fixation d'une commande d'ouverture extérieure, équipée d'une serrure, pour l'actionnement de l'ouverture et de la fermeture de l'ouvrant. Une structure d'un ouvrant de véhicule automobile selon le préambule de la revendication 1 est connue de FR2877031.

### Etat de la technique

Les portes de véhicules automobiles, principalement les portes latérales ou portières permettant l'accès des occupants aux sièges, appelées plus généralement ouvrants du véhicule, comprennent de nombreux éléments fonctionnels et ont une structure interne habituellement appelée « en caisson ». Les portes comprennent ainsi de façon usuelle un caisson intérieur de structure complexe, auquel sont couplés des éléments fonctionnels, lequel caisson est recouvert par un panneau interne, de préférence en matière plastique, et un panneau externe, de préférence en tôle, formant son habillage.

Comme décrit notamment dans le brevet FR 2 877 882 de la demanderesse, une structure d'ouvrant comporte ainsi classiquement un caisson inférieur creux sur un bord supérieur duquel est fixé un cadre destiné à recevoir une vitre du véhicule. Le cadre est muni d'au moins un montant de guidage supérieur et le caisson est muni d'au moins un montant de guidage inférieur, fixé au caisson par au moins un élément de fixation, pour le coulissement de la vitre, entre une position haute dans laquelle le vitre est reçue par le montant de guidage supérieur et une position basse dans laquelle la vitre est reçue à l'intérieur du caisson par le montant de guidage inférieur. La structure comporte également des moyens de fixation pour une commande d'ouverture extérieure, fixée sur l'ouvrant et équipée d'une serrure, pour l'actionnement de l'ouverture et de la fermeture de l'ouvrant.

Toutefois, de telles structures de portes, même si elles permettent à première vue de répondre à différentes contraintes de conception, elles ne permettent pas de répondre à toutes les contraintes, que sont notamment une sécurité anti effraction (anti crochetage et anti hochement), une sécurité anti ouverture de porte en cas de choc latéral, une robustesse par rapport aux efforts engendrés par le débattement du cadre et le claquement de la porte, etc.

### Objet de l'invention

L'invention a pour but de remédier à l'ensemble des inconvénients précités et a pour objet la réalisation d'une structure d'un ouvrant de véhicule automobile qui permettent de répondre à un maximum de contraintes, tout en étant simple à fabriquer, à moindre coût et sans une re-conception complète de la structure de l'ouvrant. La structure comprend un second élément de fixation dudit montant de guidage inférieur sur le caisson, le second élément de fixation étant multifonctions. Ledit premier élément de fixation est agencé sur une partie inférieure dudit montant de guidage inférieur et ledit second élément de fixation est agencé sur une partie supérieure dudit montant de guidage inférieur, sensiblement en regard de la commande d'ouverture extérieure installée sur l'ouvrant.

Une telle structure de porte comprenant un élément de fixation agencé de façon prédéterminée à l'intérieur du caisson permet ainsi de répondre aux différentes contraintes énoncées ci-dessus, sans modifications structurelles complètes de la porte.

L'invention a également pour objet un élément de fixation intégré dans une telle structure, qui soit simple à réaliser, à moindre coût, et qui puisse être intégré facilement dans tout type de structure d'ouvrant.

Cet objet de l'invention est caractérisé plus particulièrement en ce que l'élément de fixation comporte une pluralité de surfaces jouant chacune le rôle d'une surface fonctionnelle.

Un tel élément de fixation permet ainsi, grâce à une unique pièce, de répondre aux différentes contraintes que sont, notamment, le crochetage, l'actionnement après choc, le hochement et la reprise des efforts. L'élément de fixation comporte une première surface fonctionnelle plane, sensiblement perpendiculaire audit montant de guidage inférieur et agencée par rapport audit cadre destiné à recevoir la vitre de sorte à empêcher toute introduction d'objet entre la vitre et ledit caisson pour atteindre la serrure de la commande d'ouverture extérieure.

Une telle surface de l'élément de fixation permet ainsi d'obturer le vide théorique présent entre la vitre et le caisson, empêchant ainsi toute introduction d'objet, du type tournevis ou grande tige, afin d'obtenir un dispositif anti crochetage de la serrure.

Selon un mode de réalisation particulier de l'invention, l'élément de fixation peut comporter une deuxième surface fonctionnelle, sensiblement perpendiculaire à ladite première surface fonctionnelle et agencée sensiblement en regard de la commande d'ouverture extérieure de l'ouvrant, apte à limiter le déplacement de la commande d'ouverture extérieure selon un axe transversal, en cas de choc latéral sur l'ouvrant.

Cette autre surface fonctionnelle de l'élément de fixation offre ainsi une surface de contact pour la commande d'ouverture extérieure, en cas de déplacement de la commande d'ouverture extérieure dû à un choc latéral. La commande d'ouverture extérieure n'est ainsi pas déformée et ne peut s'ouvrir librement après le choc.

Selon une caractéristique additionnelle particulièrement avantageuse, l'élément de fixation peut comporter une troisième surface fonctionnelle, sensiblement parallèle à ladite première surface fonctionnelle et sensiblement perpendiculaire à ladite deuxième surface fonctionnelle, apte à limiter le déplacement de la commande d'ouverture extérieure selon un axe vertical, en cas d'introduction d'un objet dans la serrure de la commande d'ouverture extérieure.

Une telle surface fonctionnelle offre ainsi une autre face de contact, empêchant le déplacement trop important de la commande d'ouverture extérieure, en cas d'introduction d'un objet dans la serrure, encore appelé « hochement ». L'élément de fixation présente ainsi une protection anti hochement.

Selon encore une autre caractéristique particulièrement avantageuse, l'élément de fixation peut comporter une quatrième surface fonctionnelle de fixation de l'élément sur ledit montant de guidage inférieur et une cinquième surface fonctionnelle de fixation de l'élément sur le caisson, lesdites quatrième et cinquième surfaces fonctionnelles permettant une reprise sur le caisson des efforts engendrés par l'utilisation de l'ouvrant.

Une telle fixation de l'élément sur le caisson permet ainsi de reprendre les efforts encaissés par le cadre, notamment lors des opérations de battement du cadre et en vu d'optimiser l'endurance au claquement de l'ouvrant.

Selon un mode de réalisation particulièrement avantageux, l'élément de fixation peut être réalisé par découpage d'une tôle plane et par pliage au niveau de zones de pliages prédéterminées, de sorte à réaliser la forme finale de l'élément de fixation.

Un tel processus de fabrication permet ainsi de produire de façon simple et peu coûteuse une pièce multifonctions.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente une vue en perspective d'un mode particulier de réalisation d'un élément de fixation selon l'invention, destiné à être intégré dans une structure d'ouvrant selon l'invention.
La figure 2 représente une vue de dessus de l'élément de fixation selon la figure 1, avant pliage pour obtenir sa forme finale.
La figure 3 représente une vue de face d'un mode particulier de réalisation d'une structure d'un ouvrant selon l'invention, destinée à intégrer un élément de fixation selon les figures 1 et 2.
Les figures 4 et 5 représentent chacune une vue agrandie d'un détail de la structure selon la figure 3, illustrant l'élément de fixation selon les figures 1 et 2.
Les figures 6 et 7 représentent chacune une vue agrandie d'un détail de la structure selon les figures 3 à 5, illustrant l'interaction entre l'élément de fixation selon les figures 1 à 5 et la serrure de la commande d'ouverture extérieure implantée dans la structure selon les figures 3 à 5.
Les figures 8 et 9 représentent chacune une autre vue agrandie d'un détail de la structure selon les figures 3 à 7, illustrant l'élément de fixation selon les figures 1 à 7.

### Description de modes particuliers de réalisation

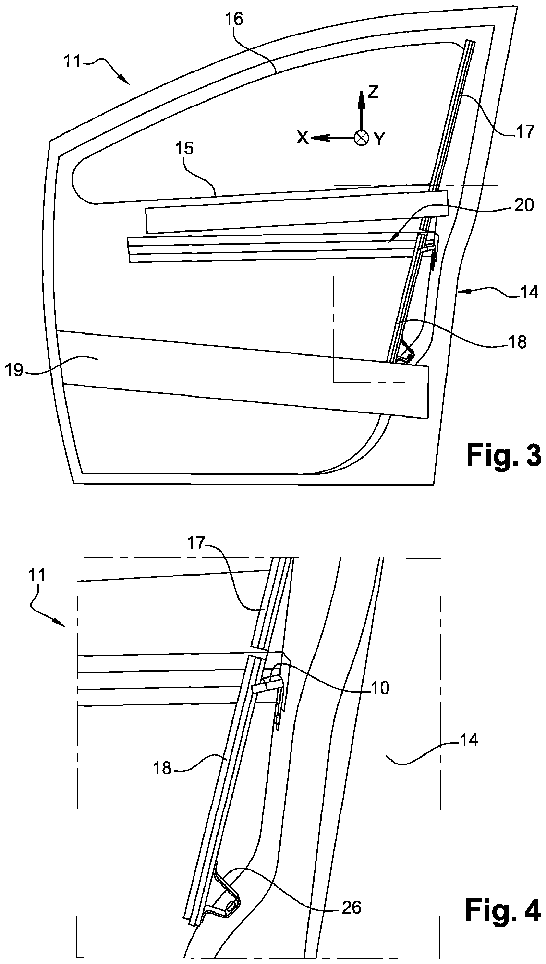

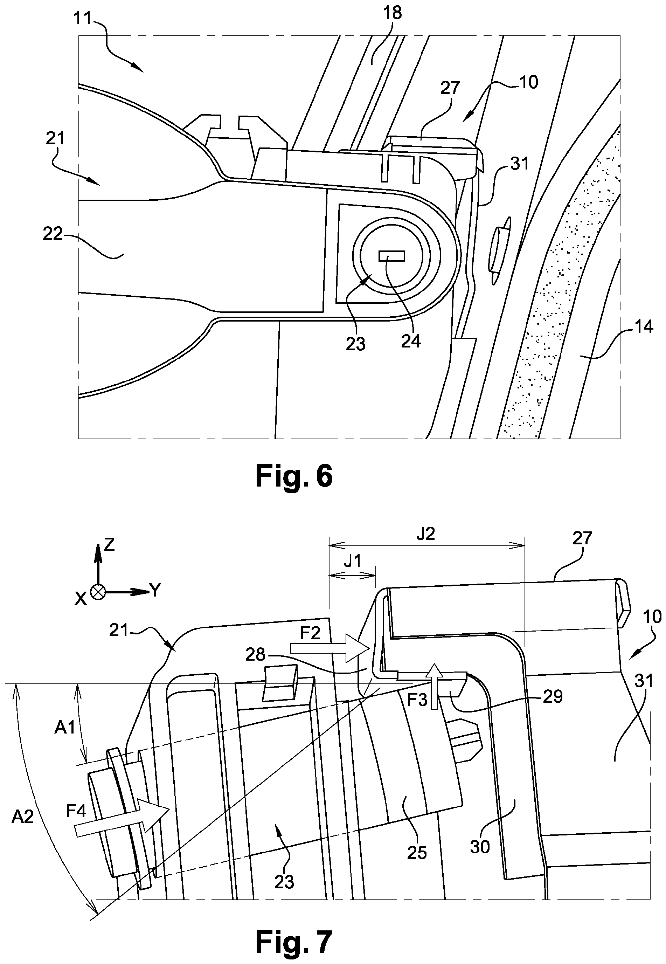

Dans la description qui va suivre, des éléments identiques ou analogues porteront les mêmes chiffres et nombres de référence. Nous utiliserons à titre non limitatif les expressions telles que « arrière » et « avant », « gauche » et « droite », « supérieur » et « inférieur » et les orientations « longitudinale », « transversale » et « verticale » en référence au trièdre (X, Y, Z) représenté aux figures 3 et 7 et aux définitions données ci-dessous.

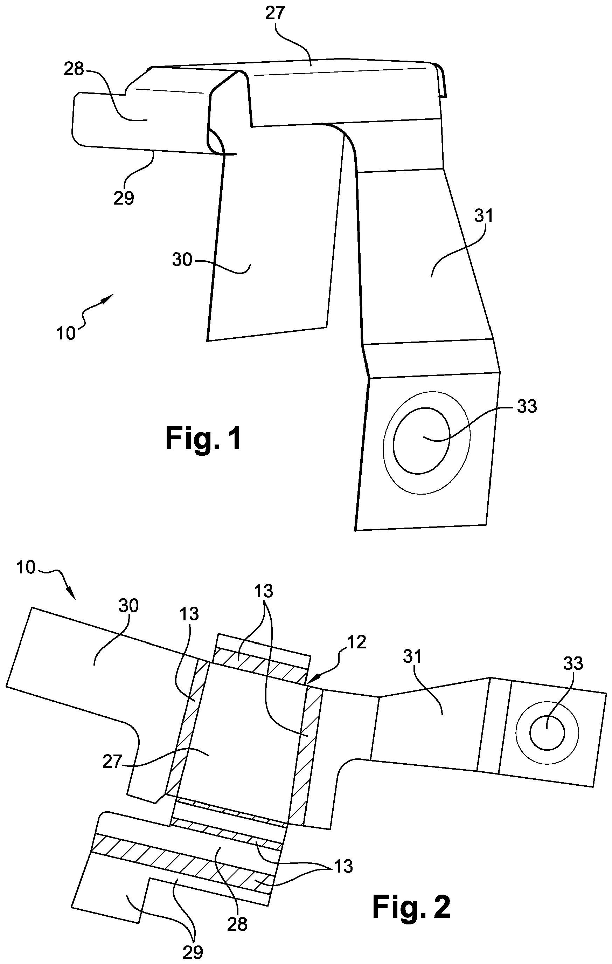

En référence aux figures 1 à 9, l'élément de fixation 10 selon l'invention (figures 1 et 2) est destiné à être intégré dans une structure 11, ou châssis, d'un ouvrant d'un véhicule automobile, à savoir une porte ou portière latérale (figure 3). Comme représenté sur les figures 1 et 2, l'élément de fixation 10 est réalisé, de préférence, à partir d'une feuille de tôle plane (non représentée), prédécoupée de sorte à obtenir l'élément provisoire 12, représentant la forme plane de l'élément de fixation 10 avant pliage. L'élément provisoire 12 comporte une pluralité de zones de pliages 13 prédéterminées, représentées par des zones hachurées sur la figure 2, de sorte à obtenir la forme particulière de l'élément de fixation 10, comme représenté sur la figure 1, après pliage selon des angles prédéfinis.

L'élément de fixation 10 selon l'invention comporte une pluralité de surfaces fonctionnelles, comme décrit ci-après en regard des figures 3 à 9, de sorte à former un élément de fixation multifonctions permettant de répondre aux différentes contraintes de sécurité liées notamment à la serrure et au claquement de l'ouvrant.

Comme représenté sur la figure 3, la structure de porte 11 selon l'invention se compose notamment d'un caisson inférieur 14 creux, délimitant un bord supérieur 15 sur lequel est fixé un cadre 16 destiné à recevoir une vitre mobile (non représentée sur les figures pour des raisons de clarté). Le cadre 16 est muni d'un premier montant de guidage 17 supérieur et le caisson 14 est muni d'un second montant de guidage 18 inférieur, destinés au coulissement de la vitre entre une première position haute, dans laquelle la vitre est reçue par le montant de guidage 17 supérieur, et une position basse, dans laquelle la vitre est reçue à l'intérieur du caisson 14 par le montant de guidage 18 inférieur.

Par ailleurs, des aménagements peuvent être prévus à l'intérieur du caisson 14, notamment pour intégrer, par exemple, des connexions électriques ou des boîtiers de commande électronique. Des évidements sont également créés, afin d'alléger le poids du caisson 14, habituellement réalisé en acier ou en aluminium. De même, une barre transversale de renfort 19, faisant office de renfort en cas de choc latéral, peut être intégrée dans le caisson inférieur 14 de la structure 11 selon l'invention.

La structure 11 de la porte comporte également des moyens de fixation 20 d'une commande d'ouverture extérieure 21 (non représentée sur la figure 3 pour des raisons de clarté), représentée plus particulièrement sur les figures 6 et 7. La commande d'ouverture extérieure 21 comporte notamment une poignée 22, destinée notamment à l'actionnement de l'ouverture et de la fermeture de la porte, et une serrure 23, composée notamment d'un orifice d'introduction 24 d'une clé et d'un barillet 25 (figures 6 et 7).

Comme représenté plus particulièrement sur la figure 4, le montant de guidage 18 inférieur est fixé au caisson inférieur 14 par l'intermédiaire d'un premier élément de fixation 26, agencé sensiblement sur une partie inférieure du montant de guidage 18 inférieur, et par l'élément de fixation 10 selon l'invention, agencé sur une partie supérieure du montant de guidage 18 inférieur. Comme représenté plus particulièrement sur la figure 7, l'élément de fixation 10 selon l'invention est agencé avantageusement sensiblement en regard de la commande d'ouverture extérieure 21 associée à la porte du véhicule.

Comme décrit plus en détails ci-après en regard des figures 1, 2 et 5 à 9, l'élément de fixation 10 multifonctions est agencé pour interagir notamment avec la serrure 23 de la commande d'ouverture extérieure 21, de sorte à répondre aux différentes contraintes inhérentes à la sécurité de la serrure et du véhicule, comme détaillé ci-dessous.

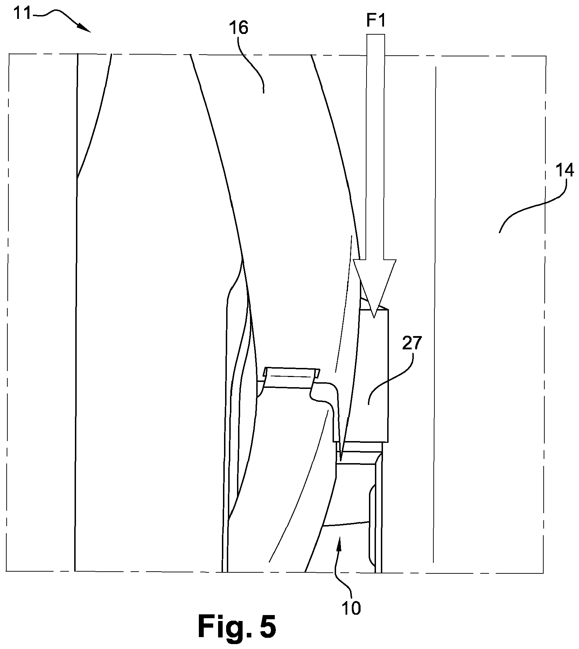

Sur la figure 5, l'élément de fixation 10 selon l'invention comporte une première face 27 principale, faisant office de première surface fonctionnelle de l'élément de fixation 10 (figures 1 et 2). La première face 27 de l'élément de fixation 10 est agencée sensiblement perpendiculairement au montant de guidage 18 inférieur et au caisson inférieur 14 (figure 4). Ainsi, comme représenté sur la figure 5, une telle face 27 de l'élément de fixation 10 permet d'obturer l'espace théorique formé entre le cadre de vite et le caisson sensiblement au-dessus de la serrure 23 de la commande d'ouverture extérieure 21, en ne considérant pas les joints d'étanchéité associés à la structure de l'ouvrant (non représentés sur les figures pour des raisons de clarté). L'introduction d'un objet, du type grande tige ou tringle, représenté schématiquement par la flèche F1 sur la figure 5, n'est ainsi pas possible, empêchant tout crochetage de la serrure 23 de la commande d'ouverture extérieure 21. La face 27 de l'élément de fixation 10 joue ainsi le rôle d'une surface anti-crochetage.

Sur les figures 6 et 7, l'élément de fixation 10 selon l'invention comporte avantageusement une première patte 28 repliée par rapport à la face principale 27 de l'élément de fixation 10 (figures 1 et 2). La première patte 28 repliée joue le rôle de deuxième surface fonctionnelle de l'élément de fixation 10, en cas de choc latéral et de déplacement inopiné de la commande d'ouverture extérieure 21, plus particulièrement de la serrure 23, selon l'axe transversal Y, représenté schématiquement par la flèche F2 sur la figure 7. La première patte 28 permet ainsi de limiter le déplacement de la commande d'ouverture extérieure 21, selon un jeu J1, beaucoup plus court que le jeu J2 théorique de déplacement en cas de choc, si l'élément de fixation 10 selon l'invention n'était pas présent. La première patte 28 joue ainsi le rôle de surface anti choc latéral.

Toujours sur les figures 6 et 7, l'élément de fixation 10 selon l'invention comporte avantageusement une deuxième patte 29 repliée par rapport à la première patte repliée 28 de l'élément de fixation 10 (figures 1 et 2). La deuxième patte repliée 29 joue le rôle de troisième surface fonctionnelle de l'élément de fixation 10, en cas de tentative d'effraction de la serrure 23 par hochement, selon l'axe vertical Z (figure 7), comme représenté schématiquement par la flèche F3 sur la figure 7. La deuxième patte 29 est repliée dans le prolongement de la première patte 28 de sorte à être agencée parallèlement à la face principale 27 de l'élément de fixation 10 et perpendiculairement à la première patte 28 repliée (figures 1 et 7).

La deuxième patte 29 repliée permet ainsi d'empêcher le déplacement vers le haut de la serrure 23, plus particulièrement du barillet 25, en cas d'introduction d'un objet à l'intérieur de la serrure 23 de la commande d'ouverture extérieure 21, comme représenté schématiquement par la flèche F4 sur la figure 7, en vue de crocheter la serrure 23 ou de l'endommager pour pouvoir ouvrir la porte du véhicule. L'angle A1 formé par la serrure 23 dans la commande d'ouverture extérieure 21 par rapport à la deuxième patte repliée 29 ne permet ainsi pas de déverrouiller la serrure 23, tandis que l'angle A2 théorique (représenté en traits pointillés sur la figure 7) qu'aurait pris la serrure 23 en l'absence de l'élément de fixation 10 aurait permis le déverrouillage de la porte. La deuxième patte 29 de l'élément de fixation 10 joue ainsi le rôle de surface anti hochement.

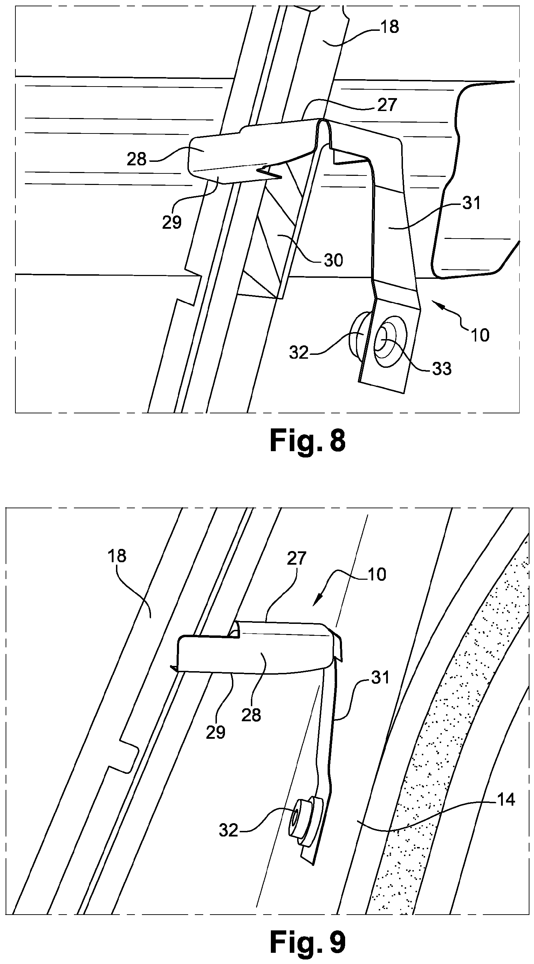

Sur les figures 8 et 9, l'élément de fixation 10 selon l'invention comporte une troisième patte 30 repliée par rapport à la face principale 27 de l'élément de fixation 10 et faisant office de quatrième surface fonctionnelle de l'élément de fixation 10 selon l'invention (figures 1 et 2). La troisième patte 30 repliée est agencée sensiblement perpendiculairement à la face principale 27 de l'élément de fixation 10 et destinée à être fixée contre le montant de guidage 18 inférieur apte à recevoir la vitre (figure 8). La troisième patte 30 repliée est, de préférence, soudée sur la partie supérieure du montant de guidage 18 inférieur fixé à l'intérieur du caisson 14 (figures 4 et 8).

Toujours sur les figures 8 et 9, l'élément de fixation 10 selon l'invention comporte une quatrième patte 31 repliée par rapport à la face principale 27 de l'élément de fixation 10 et faisant office de cinquième surface fonctionnelle de l'élément de fixation 10 selon l'invention (figures 1 et 2). La quatrième patte 31 repliée est agencée sensiblement perpendiculairement à la face principale 27 de l'élément de fixation 10, et sensiblement parallèlement à la troisième patte repliée 30, et destinée à être fixée contre le caisson 14 (figure 9). La quatrième patte 31 est, de préférence, fixée au caisson 14 par l'intermédiaire d'une vis 32 passant à travers un orifice 33 ménagé dans l'extrémité inférieure de la quatrième patte 31 repliée de l'élément de fixation 10.

De telles pattes repliées 30, 31 permettent, plus particulièrement, la reprise des efforts engendrés par l'utilisation de la porte, par exemple le battement du cadre, l'endurance au claquement de la porte, etc..., directement sur le caisson 14. Une telle reprise d'efforts permet ainsi une meilleure robustesse de la porte en utilisation et une meilleure longévité de la structure 11 de la porte. Les troisième et quatrième pattes 30, 31 repliées jouent ainsi le rôle de surface de reprise des efforts, pour une meilleure solidité de la structure 11 de l'ouvrant en utilisation.

Ainsi, quel que soit le mode de réalisation de l'élément de fixation 10 selon l'invention et de la structure 11 de l'ouvrant selon l'invention, comme représenté sur les figures ci-dessus, l'élément de fixation 10 selon l'invention présente ainsi l'avantage principal d'être une unique pièce multifonctions, simple à réaliser, à moindre frais et très facilement intégrable dans une structure de porte existante.

Les surfaces fonctionnelles de l'élément de fixation 10, de par la création même de l'élément de fixation 10 et de par leur interaction avec la serrure 23 de la commande d'ouverture extérieure 21, permettent ainsi de répondre aux différentes contraintes de sécurité de la serrure de la porte de façon simple et peu onéreuse.

Par ailleurs, la structure 11 de l'ouvrant selon l'invention est également très facilement réalisable, il suffit d'intégrer l'élément de fixation 10 selon l'invention en coopération avec le montant de guidage 18 inférieur de la vitre mobile. La structure 11 de l'ouvrant peut ainsi conserver le montant de guidage 18 spécifique à l'intérieur du caisson inférieur, l'ajout de l'élément de fixation 10 selon l'invention s'avérant très peu coûteux et très simple. De même, il n'est pas nécessaire de réaliser un guidage spécifique ou de modifier l'étanchéité de la structure 11 selon l'invention.

L'invention n'est pas limitée aux différents modes de réalisation décrits ci-dessus. Notamment, les dimensions et la forme de l'élément de fixation 10 selon l'invention sont non limitatives et dépendent des dimensions de la structure 11 de l'ouvrant selon l'invention.

La forme et le nombre des surfaces fonctionnelles de l'élément de fixation 10 peuvent être différents, tant qu'ils permettent de rendre l'élément de fixation multifonctions, avec au moins une surface anti crochetage, une surface anti choc latéral, une surface anti hochement et au moins une surface de reprise des efforts entre le montant de guidage et le caisson inférieur.

De même, la forme et les dimensions de la structure 11 de l'ouvrant selon l'invention peuvent être différentes, tant que la structure 11 comporte un montant de guidage inférieur pour la vitre pouvant intégrer un élément de fixation 10 selon l'invention.

L'invention s'applique donc à tout type de véhicule automobile, comprenant tout type d'ouvrant de véhicule automobile, dont la structure peut intégrer un tel élément de fixation en vue de répondre aux différentes contraintes énoncées ci-dessus.

## Revendications

1. Structure (11) pour ouvrant de véhicule automobile, comportant au moins :
- un caisson inférieur (14) creux sur un bord supérieur (15) duquel est fixé un cadre (16) destiné à recevoir une vitre du véhicule,
- ledit cadre (16) étant muni d'au moins un montant de guidage (17) supérieur et le caisson (14) étant muni d'au moins un montant de guidage (18) inférieur, fixé audit caisson (14) par l'intermédiaire d'un premier élément de fixation (26),
- lesdits montants de guidage (17) supérieur et (18) inférieur étant destinés au coulissement de la vitre entre une position haute, dans laquelle la vitre est reçue par ledit montant de guidage (17) supérieur, et une position basse, dans laquelle la vitre est reçue à l'intérieur du caisson (14) par ledit montant de guidage (18) inférieur, et
- des moyens de fixation d'une commande d'ouverture extérieure (21), équipée d'une serrure (23), pour l'actionnement de l'ouverture et de la fermeture de l'ouvrant,
- un second élément de fixation (10) dudit montant de guidage (18) inférieur sur le caisson (14),
**structure caractérisée en ce que :**
- ledit premier élément de fixation (26) est agencé sur une partie inférieure dudit montant de guidage (18) inférieur et ledit second élément de fixation (10) est agencé sur une partie supérieure dudit montant de guidage (18) inférieur, sensiblement en regard de la serrure (23) de la commande d'ouverture extérieure (21) installée sur l'ouvrant, et **en ce que**
- ledit second élément de fixation (10) comporte une pluralité de surfaces (27,28,29,30,31) jouant chacune le rôle d'une surface fonctionnelle, une première surface fonctionnelle (27) plane, sensiblement perpendiculaire audit montant de guidage (18) inférieur étant agencée par rapport audit cadre (16) destiné à recevoir la vitre de sorte à empêcher toute introduction d'objet entre la vitre et ledit caisson (14) pour atteindre la serrure (23) de la commande d'ouverture extérieure (21).

2. Structure (11) selon la revendication précédente, **caractérisé en ce que** le second élément de fixation (10) comporte une deuxième surface fonctionnelle (28), sensiblement perpendiculaire à ladite première surface fonctionnelle (27) et agencée sensiblement en regard de la serrure (23) de la commande d'ouverture extérieure (21) de l'ouvrant, apte à limiter le déplacement de la serrure (23) selon un axe transversal (Y), en cas de choc latéral sur l'ouvrant.

3. Structure (11) selon la revendication précédente, **caractérisé en ce que** le second élément de fixation (10) comporte une troisième surface fonctionnelle (29), sensiblement parallèle à ladite première surface fonctionnelle (27) et sensiblement perpendiculaire à ladite deuxième surface fonctionnelle (28), apte à limiter le déplacement de la serrure (23) selon un axe vertical (Z), en cas d'introduction d'un objet dans la serrure (23) de la commande d'ouverture extérieure (21).

4. Structure (11) selon la revendication précédente, **caractérisé en ce que** le second élément de fixation (10) comporte une quatrième surface fonctionnelle (30) de fixation de l'élément (10) sur ledit montant de guidage (18) inférieur et une cinquième surface fonctionnelle (31) de fixation de l'élément (10) sur le caisson (14), lesdites quatrième (30) et cinquième (31) surfaces fonctionnelles permettant une reprise sur le caisson (14) des efforts engendrés par l'utilisation de l'ouvrant.

5. Structure (11) selon l'une quelconque des revendications 1 à 4, **caractérisé en ce que** le second élément de fixation (10) est réalisé par découpage d'une tôle plane (12) et par pliage au niveau de zones de pliages (13) prédéterminées, de sorte à réaliser la forme finale de l'élément de fixation (10).

6. Ouvrant de véhicule automobile **caractérisé en ce qu'**il comporte une structure (11) selon l'une quelconque des revendications 1 à 5.

## Patentansprüche

1. Struktur (11) für eine Kraftfahrzeugtür, umfassend mindestens:
- einen unteren hohlen Kasten (14), an dessen oberen Rand (15) ein Rahmen (16) befestigt ist, der dazu bestimmt ist, eine Scheibe des Fahrzeugs aufzunehmen,
- wobei der Rahmen (16) mit mindestens einer oberen Führungsstütze (17) versehen ist, und wobei der Kasten (14) mit mindestens einer unteren Führungsstütze (18) versehen ist, die am Kasten (14) mit Hilfe eines ersten Befestigungselements (26) befestigt ist,
- wobei die oberen (17) und unteren (18) Führungsstützen für das Gleiten der Scheibe zwischen einer oberen Position, in der die Scheibe von der oberen Führungsstütze (17) aufgenommen wird, und einer unteren Position, in der die Scheibe in dem Kasten (14) durch die untere Führungsstütze (18) aufgenommen wird, bestimmt sind, und
- Mittel zur Befestigung einer externen Öffnungssteuerung (21), die mit einem Schloss (23) versehen ist, für die Betätigung des Öffnens und Schließens der Tür,
- ein zweites Element (10) zur Befestigung der unteren Führungsstütze (18) am Kasten (14),
**dadurch gekennzeichnet, dass**:
- das erste Befestigungselement (26) an einem unteren Teil der unteren Führungsstütze (18) angeordnet ist, und das zweite Befestigungselement (10) an einem oberen Teil der unteren Führungsstütze (18) im Wesentlichen gegenüber dem Schloss (23) der an der Tür installierten externen Öffnungssteuerung (21) angeordnet ist, und dass
- das zweite Befestigungselement (10) eine Vielzahl von Flächen (27, 28, 29, 30, 31) umfasst, die jeweils die Rolle einer Funktionsfläche spielen, wobei eine erste flache Funktionsfläche (27) im Wesentlichen senkrecht auf die untere Führungsstütze (18) in Bezug zu dem Rahmen (16), der dazu bestimmt ist, die Scheibe aufzunehmen, derart angeordnet ist, dass jede Einführung eines Gegenstandes zwischen die Scheibe und den Kasten (14), um das Schloss (23) der externen Öffnungssteuerung (21) zu erreichen, verhindert wird.

2. Struktur (11) nach dem vorhergehenden Anspruch, **dadurch gekennzeichnet, dass** das zweite Befestigungselement (10) eine zweite Funktionsfläche (28) im Wesentlichen senkrecht auf die erste Funktionsfläche (27) umfasst, die im Wesentlichen gegenüber dem Schloss (23) der externen Öffnungssteuerung (21) der Tür angeordnet und geeignet ist, die Verschiebung des Schlosses (23) entlang einer Querachse (Y) im Fall eines Seitenaufpralls gegen die Tür zu begrenzen.

3. Struktur (11) nach dem vorhergehenden Anspruch, **dadurch gekennzeichnet, dass** das zweite Befestigungselement (10) eine dritte Funktionsfläche (29) im Wesentlichen parallel zur ersten Funktionsfläche (27) und im Wesentlichen senkrecht auf die zweite Funktionsfläche (28) umfasst, die geeignet ist, die Verschiebung des Schlosses (23) entlang einer Vertikalachse (Z) im Falle der Einführung eines Gegenstandes in das Schloss (23) der externen Öffnungssteuerung (21) zu begrenzen.

4. Struktur (11) nach dem vorhergehenden Anspruch, **dadurch gekennzeichnet, dass** das zweite Befestigungselement (10) eine vierte Funktionsfläche (30) zur Befestigung des Elements (10) an der unteren Führungsstütze (18) und eine fünfte Funktionsfläche (31) zur Befestigung des Elements (10) an dem Kasten (14) umfasst, wobei die vierte (30) und die fünfte (31) Funktionsfläche die Aufnahme der durch die Verwendung der Tür erzeugten Kräfte am Kasten (14) ermöglichen.

5. Struktur (11) nach einem der Ansprüche 1 bis 4, **dadurch gekennzeichnet, dass** das zweite Befestigungselement (10) durch Ausschneiden eines flachen Blechs (12) und Falzen im Bereich von vorbestimmten Falzzonen (13), um die endgültige Form des Befestigungselements (10) zu erhalten, hergestellt wird.

6. Kraftfahrzeugtür, **dadurch gekennzeichnet, dass** sie eine Struktur (11) nach einem der Ansprüche 1 bis 5 umfasst.

## Claims

1. Structure (11) for a motor vehicle door, comprising at least:
- a hollow lower box section (14) on an upper edge (15) of which is attached a frame (16) intended to accept a window of the vehicle,
- the said frame (16) being equipped with at least one upper guide upright (17) and the box section (14) being equipped with at least one lower guide upright (18), fixed to the said box section (14) by means of a first fixing element (26),
- the said upper (17) and lower (18) guide uprights being intended for the sliding of the window between an up position in which the window is accepted by the said upper guide upright (17) and a down position in which the window is accepted inside the box section (14) via the lower guide upright (18), and
- means of attachment of a control (21) for opening from the outside, equipped with a lock (23) for actuating the opening and closing of the door,
- a second fixing element (10) for fixing the said lower guide upright (18) to the box section (14), which structure is **characterized in that**:
- the said first fixing element (26) is arranged on a lower part of the said lower guide upright (18) and the said second fixing element (10) is arranged on an upper part of the said lower guide upright (18), substantially facing the lock (23) of the control (21) for opening from the outside which is installed on the door, and **in that**
- the said second fixing element (10) comprises a plurality of surfaces (27, 28, 29, 30, 31) each acting as functional surface, a planar first functional surface (27), substantially perpendicular to the said lower guide upright (18) being arranged with respect to the said frame (16) intended to accept the window in such a way as to prevent any object from being inserted between the window and the said box section (14) in order to reach the lock (23) of the control (21) for opening from the outside.

2. Structure (11) according to the preceding claim, **characterized in that** the second fixing element (10) comprises a second functional surface (28) substantially perpendicular to the said first functional surface (27) and arranged substantially facing the lock (23) of the control (21) for opening the door from the outside, able to limit the movement of the lock (23) along a transverse axis (Y) in the event of a side impact on the door.

3. Structure (11) according to the preceding claim, **characterized in that** the second fixing element (10) comprises a third functional surface (29) substantially parallel to the said first functional surface (27) and substantially perpendicular to the said second functional surface (28), able to limit the movement of the lock (23) along a vertical axis (Z) in the event of an object being inserted into the lock (23) of the control (21) for opening from the outside.

4. Structure (11) according to the preceding claim, **characterized in that** the second fixing element (10) comprises a fourth functional surface (30) for fixing the element (10) onto the said lower guide upright (18) and a fifth functional surface (31) for fixing the element (10) onto the box section (14), the said fourth (30) and fifth (31) functional surfaces allowing loads generated by the use of the door to be reacted by the box section (14).

5. Structure (11) according to any one of Claims 1 to 4, **characterized in that** the second fixing element (10) is produced by cutting a flat metal sheet (12) and bending at predetermined bend zones (13) so as to create the final shape of the fixing element (10) .

6. Motor vehicle door **characterized in that** it comprises a structure (11) according to any one of Claims 1 to 5.
